# EUROPÄISCHE PATENTSCHRIFT

(11) **EP 1 662 354 B1**
(45) Veröffentlichungstag und Bekanntmachung des Hinweises auf die Patenterteilung: **05.03.2014**
(21) Anmeldenummer: 05025640.3
(22) Anmeldetag: 24.11.2005
(51) Int. Cl.: G05D 23/13

(54) **Betätigungsvorrichtung für eine sanitäre, insbesondere elektronische, Armatur und Verfahren zum Betreiben einer solchen**
Actuating mechanism and method for operating a sanitary, in particular electronic measuring instrument
Dispositif d'actionnement destiné à une robinetterie sanitaire, en particulier électronique, et procédé destiné au fonctionnement d'un tel dispositif

(30) Priorität: 26.11.2004 DE 102004057174
(43) Veröffentlichungstag der Anmeldung: 31.05.2006
(73) Patentinhaber: HANSA METALLWERKE AG, 70567 Stuttgart (DE)
(72) Erfinder: Kunkel, Horst, 70199 Stuttgart (DE)
(74) Vertreter: Ostertag, Ulrich

(56) Entgegenhaltungen:
- EP-A2- 0 961 067
- DE-A1- 10 219 171
- DE-C1- 3 812 736

## Beschreibung

Die Erfindung betrifft eine Betätigungsvorrichtung für eine sanitäre Armatur nach dem Oberbegriff des Patentanspruchs 1.

Außerdem betrifft die Erfindung ein Verfahren zum Betreiben einer Betätigungsvorrichtung für eine sanitäre Armatur nach dem Oberbegriff des Patentanspruchs 15.

Es sind Betätigungsvorrichtungen für sanitäre Armaturen bekannt, mit denen die Temperatur und/oder der Volumenstrom des aus dem Wasserauslauf der Sanitärarmatur austretenden Wassers einstellbar ist.

Bei den meisten bekannten Armaturen dieser Art sind die aktuelle Wassertemperatur und/oder die Wasserdurchflussmenge lediglich über den austretenden Wasserstrahl erkennbar, insbesondere erfühlbar. Aufgrund des räumlichen Abstands zwischen entsprechenden Proportional- oder Temperierventilen oder dergleichen und dem Wasserauslauf ändert sich die Wassertemperatur und/oder die Wasserdurchflussmenge im Bereich des letzteren erst nach einer entsprechenden Verzögerung in Anschluss an eine Änderung der Ventileinstellungen. Der Benutzer erhält daher kein unmittelbares Feedback, so dass es vorkommen kann, dass beispielsweise unerwünscht große oder kleine Wassertemperaturen eingestellt werden. Das Erfühlen von extrem großen oder kleinen Wassertemperaturen kann aber schmerzhaft, zumindest aber unangenehm sein.

Vereinzelt sind auch Sanitärarmaturen im Gebrauch, bei denen die Temperatur des austretenden Mischwassers als Zahlenwert in einer Digitalanzeige angegeben wird. Dieser Zahlenwert ist jedoch wenig anschaulich.

Eine Betätigungsvorrichtung der eingangs genannten Art ist aus der DE 38 12 736 C1 bekannt. Dort ist unterhalb eines zweidimensionalen matrixartigen Anzeigefeldes ein ebenfalls zweidimensionales Raster von Kontaktpunkten angeordnet, welches den Fingerdruck eines Benutzers erkennt und die gewünschte Durchflussmenge sowie Mischtemperatur bewirkt. Jeder Matrixpunkt wird durch zwei zusammengehörige Rechtecke unterschiedlicher Helligkeit und unterschiedlicher Breite repräsentiert und entspricht einer bestimmten Kombination von Warmwasser- und Kaltwasserdurchfluss. Die Breite entspricht dabei dem jeweiligen Durchfluss, während die hellen Rechtecke beispielsweise den Kaltwasseranteil, die dunklen Rechtecke den Warmwasseranteil darstellen. Diese bekannte Betätigungsvorrichtung ist recht aufwändig und benötigt verhältnismäßig viel Platz. Auch sind die Einstellungen nicht besonders einfach zu erfassen.

Aufgabe der vorliegenden Erfindung ist es, eine Betätigungsvorrichtung für eine Temperierarmatur der eingangs genannten Art und ein Verfahren zum Betreiben einer solchen so auszugestalten, dass die aktuellen Einstellungen der Wassertemperatur und/oder der Wasserdurchflussmenge leicht und Änderungen derselben unmittelbar im Anschluss an eine Betätigung des Betätigungselements ohne Verzögerung erfassbar sind. Die Betätigungsvorrichtung soll außerdem preisgünstig herstellbar sein und geringen Platzbedarf haben.

Diese Aufgabe wird, was die Vorrichtung anbelangt, erfindungsgemäß durch eine Betätigungsvorrichtung mit den im Patentanspruch 1 angegebenen Merkmalen gelöst.

Mit der Anzeigeeinrichtung sind also die aktuell eingestellte Wassertemperatur als Größe einer Linie oder einer Fläche darstellbar, welche von einer Vielzahl einzeln ansteuerbarer Leuchtmittel gebildet ist. Dies ermöglicht eine deutlich sichtbare und optisch ansprechende quantitative Darstellung der Wassertemperatur, indem beispielsweise eine entsprechende Anzahl von Leuchtmitteln strahlend angesteuert wird. Die Anzeigeeinrichtung ist auf elektronischem Wege entweder mit dem Betätigungselement oder entsprechenden Ventilen verbunden. Auf diese Weise wird die tatsächlich eingestellte Wassertemperatur unabhängig vom räumlichen Abstand zwischen den Ventilen und dem Wasserauslauf nahezu ohne Verzögerung angezeigt. Die angezeigten Einstellungen sind hierbei entweder abhängig von einer Betätigung des Betätigungselements oder von den Öffnungsquerschnitten entsprechender Ventile. Das Erfühlen der Wassertemperatur ist hier nicht mehr erforderlich. Die Beziehung zwischen der Größe der angezeigten Fläche und dem hierdurch symbolisierten Betriebsparameter ist intuitiv leicht erfassbar.

Dabei sind zwei Arten von Leuchtmitteln vorgesehen, mit denen der Wasservolumenstrom durch eine Warmwasser-Speiseleitung der Armatur und der Wasservolumenstrom durch eine Kaltwasser-Speiseleitung der Armatur getrennt visualisiert werden können. Durch die getrennte Visualisierung beider Wasservolumenströme ist für den Benutzer die Temperatur des abgegebenen Wassers schnell erfassbar.

Erfindungsgemäß ist nun vorgesehen, dass die Summe der aktivierten Leuchtmittel für die beiden Wasservolumenströme durch die Kaltwasser- und Warmwasser-Speiseleitungen ein Maß für den Wasservolumenstrom des abgegebenen Wassers ist.

Eine vorteilhafte Ausführungsform sieht vor, dass die Anzeigeeinrichtung die Funktion des Betätigungselements visualisiert. Auf diese Weise wird einfach und klar verständlich die Funktion des Betätigungselements erläutert.

Besonders übersichtlich und platzsparend ist es, wenn die Anzeigeeinrichtung im Wesentlichen linear ist.

In einer bevorzugten Ausführungsform umfassen die Leuchtmittel Leuchtdioden. Die Verwendung von Leuchtdioden hat den Vorteil, dass diese robust sind und einfach angesteuert werden können.

Um insbesondere die Darstellung der Wassertemperatur einfach interpretieren zu können, kann die Anzeigeeinrichtung in unterschiedlichen Farben strahlende Leuchtmittel aufweisen. Besonders übersichtlich ist es, wenn die Leuchtmittel insbesondere paarweise nebeneinander angeordnet sind.

Bei einer weiteren vorteilhaften Ausführungsform ist eine Anzahl von strahlenden Leuchtmitteln proportional zum Wasservolumenstrom, so dass der Benutzer den Wasservolumenstrom ohne aufwändige Interpretation schnell erfassen kann.

Die Wassertemperatur ist für den Benutzer bei einer weiteren vorteilhaften Ausführungsform schnell erfassbar, bei der das Verhältnis einer Ausdehnung einer mit der Anzeigeeinrichtung in einer ersten Farbe; insbesondere in Rot, dargestellten ersten Fläche zu einer Ausdehnung einer in einer zweiten Farbe, insbesondere in Blau, dargestellten zweiten Fläche, insbesondere das Verhältnis der Anzahl von in der ersten Farbe strahlenden Leuchtmitteln, die die erste Fläche kennzeichnen, zur Anzahl von in der zweiten Farbe strahlenden Leuchtmitteln, die die zweite Fläche kennzeichnen, abhängig von der Wassertemperatur ist. Die Farbzuordnung Rot/Blau zur Verdeutlichung einer Temperatur ist allgemein üblich und leicht verständlich.

Visuell besonders ansprechend ist es, wenn die Anzeigeeinrichtung eine Vielzahl von Bargraphelementen aufweist.

Zusätzlich können bei einer weiteren vorteilhaften Ausführungsform, die eine akustische Ausgabeeinheit aufweist, akustische Informations- und Warnsignale ausgegeben werden.

Bei einer weiteren vorteilhaften Ausführungsform ist das Betätigungselement ein Sensor, insbesondere ein wenigstens ein Piezoelement aufweisender Sensor oder ein kapazitiver Sensor. Dieser hat den Vorteil, dass er nahezu ohne Kraftaufwand betätigbar und darüber hinaus wartungsfrei ist.

Der Wasserauslauf kann selbst ein kapazitives Betätigungselement sein, so dass auf einen gesonderten Sensor verzichtet werden kann.

Alternativ oder zusätzlich kann auch ein mechanisches Betätigungselement, insbesondere ein Mischhebel, vorgesehen sein, so dass auch eine Design-Variationen möglich ist. Die Wassertemperatur kann dann über ein Verhältnis eines Öffnungsquerschnitts eines Warmwasserventils zum einem Öffnungsquerschnitt eines Kaltwasserventil, und der Wasservolumenstrom über den gesamten Öffnungsquerschnitt aller Ventile erfasst werden.

Vorteilhafterweise kann wenigstens ein separates Betätigungselement zum Starten und/oder Stoppen des Wasservolumenstroms vorgesehen sein, mit dem der Wasserfluss ohne aufwändige Interpretation gestartet beziehungsweise gestoppt werden kann.

Vorzugsweise ist die Betätigungsvorrichtung Teil einer elektronischen Sanitärarmatur.

Die oben genannte Aufgabe wird, was das Verfahren anbelangt, durch das im Patentanspruch 15 angegebenen Verfahren gelöst.

Bei dem erfindungsgemäßen Verfahren wird mindestens eine Linie oder Fläche mit einer Ausdehnung dargestellt, welche ein Maß für die Wasservolumenströme der Warmwasser- sowie, getrennt davon, der Kaltwasser-Speiseleitung darstellen. Auf diese Weise wird der Benutzer schnell und zuverlässig über den aktuellen Wert der Wassertemperatur und/oder des Wasservolumenstroms informiert.

Um eine schnelle Information über den Wasservolumenstrom zu erhalten, kann beispielsweise eine zum Wasservolumenstrom proportionale Anzahl von Leuchtmitteln aktiviert werden.

Bei einer weiteren vorteilhaften Ausgestaltung des Verfahrens wird abhängig von der Wassertemperatur das Verhältnis einer Ausdehnung einer mit der Anzeigeeinrichtung in einer ersten Farbe, insbesondere in Rot, dargestellten ersten Fläche zu einer Ausdehnung einer in einer zweiten Farbe, insbesondere in Blau, dargestellten zweiten Fläche, insbesondere das Verhältnis der Anzahl von in der ersten Farbe strahlenden Leuchtmitteln, die die erste Fläche kennzeichnen, zur Anzahl von in der zweiten Farbe strahlenden Leuchtmittel, die die zweite Fläche kennzeichnen, vorgegeben, so dass die Wassertemperatur auf einen Blick erfasst werden kann.

Zweckmäßig ist ferner, wenn ein optisches und/oder akustisches Signal erzeugt wird, sobald ein höchster einstellbarer Wert oder ein niedrigster einstellbarer Wert der Wassertemperatur und/oder des Wasservolumenstroms erreicht ist. Auf diese Weise wird der Benutzer darauf hingewiesen, dass beispielsweise die entsprechenden Ventile vollständig geöffnet oder geschlossen sind, so dass weitere Änderungen der entsprechenden Zustandsgröße nicht möglich sind.

Um dem Benutzer ein Feedback zu geben, ob die Betätigung des Betätigungselementes erfolgreich war, sieht eine weitere Ausgestaltung des Verfahrens vor, dass ein optisches und/oder akustisches Signal ausgegeben wird, sobald das Betätigungselement betätigt wird.

Eine weitere vorteilhafte Ausgestaltung des Verfahrens sieht vor, dass bei einer Betätigung eines Betätigungselements zunächst das Signal abhängig von einer eingestellten Soll-Wassertemperatur und/oder einem eingestellten Soll-Wasservölumenstrom, und anschließend abhängig von der aktuell vorliegenden Ist-Wassertemperatur und/oder dem aktuellen vorliegenden Ist-Wasservolumenstrom insbesondere bis zum Erreichen der Soll-Einstellung alternierend ausgegeben wird. Dies hat den großen Vorteil, dass der Benutzer durch die Visualisierung der jeweiligen Soll-Einstellung eine sofortige Rückmeldung der Veränderung erhält. Darüber hinaus wird er danach fortlaufend über die aktuell vorliegende Ist-Einstellung informiert. Die Ausgabe eines alternierenden Signals informiert den Benutzer darüber, dass Soll- und Ist-Einstellung noch nicht übereinstimmen. Sobald Soll- und Ist-Einstellung übereinstimmen, kann dann ein konstantes Signal ausgegeben werden.

Das Verfahren eignet sich besonders für eine elektronische Sanitärarmatur.

Ausführungsbeispiele der Erfindung werden nachfolgend anhand der Zeichnung näher erläutert; es zeigen
- Figur 1: schematisch ein erstes Ausführungsbeispiel einer elektronischen Betätigungsvorrichtung für eine Sanitärarmatur mit einer Anzeigeeinrichtung für die Wassertemperatur, die hier anzeigt, dass Wasser mit nahezu der niedrigsten einstellbaren Temperatur und etwas mehr als mittlerem Volumenstrom austritt;
- Figur 2: schematisch die in Figur 1 dargestellte Betätigungsvorrichtung, wobei die Anzeigeeinrichtung hier anzeigt, dass das austretende Wasser eine mittlere Temperatur aufweist und mit dem höchsten einstellbaren Volumenstrom austritt;
- Figur 3: schematisch die in Figur 1 dargestellte Betätigungsvorrichtung, wobei die Anzeigeeinrichtung hier anzeigt, dass Wasser mit der höchsten einstellbaren Temperatur austritt.
- Figur 4: schematisch ein zweites Ausführungsbeispiel einer elektronischen Betätigungsvorrichtung für eine Sanitärarmatur mit einer Bargraphzeile.

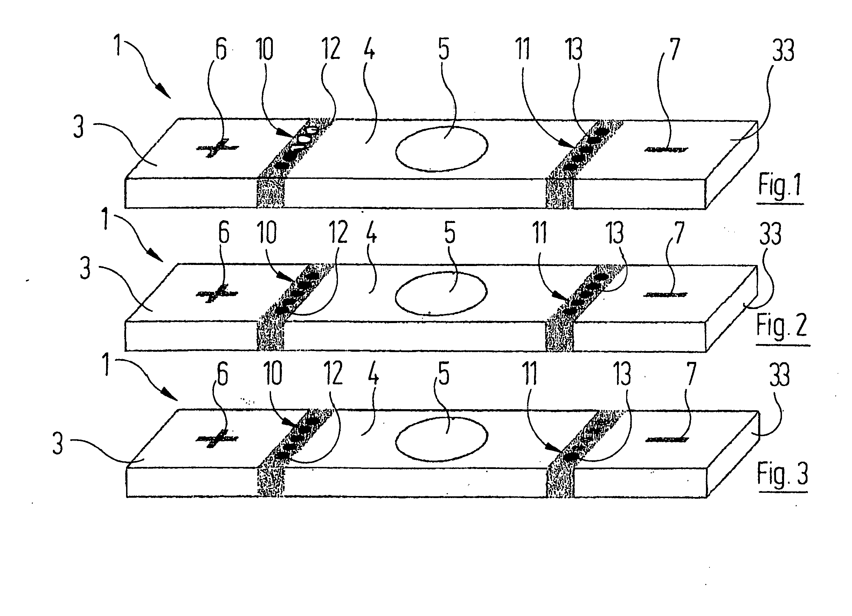

In Figuren 1, 2, 3 ist ein erstes Ausführungsbeispiel einer insgesamt mit dem Bezugszeichen 1 versehenen elektronischen Betätigungsvorrichtung für eine nicht dargestellte Sanitärarmatur gezeigt. Mit der Sanitärarmatur sind die Wassertemperatur und der Wasservolumenstrom des aus einem nicht dargestellten Wasserauslauf austretenden Wassers einstellbar.

Die Betätigungsvorrichtung 1 hat eine längliche Form. In ihrer Mitte ist in einem, ein in Figuren 1, 2, 3 nicht sichtbares Piezoelement aufweisender, Mengenänderungssensor 4, mit dem der Wasservolumenstrom eingestellt werden kann, eine durchgängige Öffnung 5 angeordnet. Die Öffnung 5 dient zur Durchführung des nicht dargestellten Wasserauslaufs.

Auf der in Figuren 1, 2, 3 linken Seite der Betätigungsvorrichtung 1 ist ein Temperaturerhöhungssensor 3 zum Vergrößern der Wassertemperatur und auf ihrer rechten Seite ein Temperaturverringerungssensor 33 zum Verkleinern der Wassertemperatur angeordnet.

Auf der oberen Oberfläche des Temperaturerhöhungssensors 3 ist ein Pluszeichen 6 angebracht, um dem Benutzer zu signalisieren, dass durch Betätigung dieses Sensors die Temperatur des austretenden Wassers erhöht wird. Der Temperaturverringerungssensor 33 ist entsprechend mit einem Minuszeichen 7 versehen. Jeweils im Bereich des Plus- und des Minuszeichens weisen die Sensoren 3, 33 in Figuren 1, 2, 3 nicht sichtbare Piezoelemente auf.

Die Sensoren 3, 4, 33 sind jeweils über nicht dargestellte Signalleitungen mit einer nicht dargestellten Steuereinheit verbunden, über die in an sich bekannter Weise entsprechende Proportional- beziehungsweise Temperierventile in einer Warmwasser- und einer Kaltwasserspeiseleitung gesteuert werden.

Zwischen dem Temperaturerhöhungssensor 3 und dem Mengenänderungssensor 4 ist eine Warmwasserleuchtdiodenzeile 10 und zwischen dem Mengenänderungssensor 4 und dem Temperaturverringerungssensor 33 eine Kaltwasserleuchtdiodenzeile 11 angeordnet.

Die Leuchtdiodenzeilen 10, 11 erstrecken sich jeweils über die gesamte Breite der Sensoren 3, 4, 33. Jede Leuchtdiodenzeilen 10, 11 weist fünf Leuchtdioden 12, 13 auf. Die Leuchtdioden 12 der Warmwasserleuchtdiodenzeile 10 strahlen rot, die Leuchtdioden 13 der Kaltwasserleuchtdiodenzeile 11 strahlen blau.

Um den Wasserfluss zu starten, wird einer der drei Sensoren 3, 4, 33 mit einer Hand berührt.

Das entsprechende Sensorsignal wird über die jeweilige Signalleitung zur Steuereinheit übermittelt, mit der die Ventile entsprechend geöffnet werden. In der Steuereinheit sind die Grundwerte für die Wassertemperatur und den Wasservolumenstrom gespeichert, die beim Starten des Wasserflusses automatisch eingestellt werden. Hierbei ist sowohl für die Wassertemperatur als auch für den Wasservolumenstrom jeweils ein Mittelwert vorgegeben. Die Mittelwerte werden aus dem jeweiligen maximalen und minimalen Wert, der durch vollständiges Öffnen beziehungsweise Schließen der Ventile realisierbar ist, gebildet.

Um den Wasservolumenstrom zu vergrößern, wird der Mengenänderungssensor 4 entweder mehrmals langsam hintereinander oder solange berührt, bis der gewünschte Wasservolumenstrom eingestellt ist. Mit jeder Berührung wird der Wasservolumenstrom um einen vorzugsweise werksseitig voreingestellten Wert vergrößert. Bei einer dauerhaften Berührung wird der Wasservolumenstrom automatisch um diesen Wert inkrementiert. Wird der Mengenänderungssensor 4 mehrmals schnell hintereinander berührt, so stoppt dies den Wasserdurchfluss.

Um die Wassertemperatur zu verändern, werden der Temperaturerhöhungssensor 3 beziehungsweise der Temperaturverringerungssensor 33 analog zum Mengenänderungssensor 4 betätigt.

Wird in einem vorgegebenen Zeitintervall von vorzugsweise 80 Sekunden keiner der Sensoren 3, 4, 33 betätigt, so wird der Wasserfluss aus Sicherheitsgründen, um einen Dauerlauf zu verhindern, mit der Steuereinheit automatisch abgeschaltet.

Die Visualisierung dieser Vorgänge geschieht wie folgt:

Solange die Betätigungsvorrichtung 1 nicht betätigt wird, also kein Wasser fließt, werden alle Leuchtdioden 12, 13 mit der Steuereinheit in einem Standby-Modus angesteuert, in dem sie mit reduzierter Intensität strahlen, aber dennoch ein deutlich sichtbares Licht aussenden, um dem Benutzer die Funktionsbereitschaft der Betätigungsvorrichtung 1 zu signalisieren. Auf diese Weise wird der Benutzer auch auf die Aufgabe des Temperaturerhöhungssensors 3 und des Temperaturverringerungssensors 33 hingewiesen.

Sobald der Temperaturerhöhungssensor 3 betätigt wird, sendet die Steuereinheit einen Impuls an die Warmwasserleuchtdiodenzeile 10, so dass als Bestätigung der Sensorbetätigung deren Leuchtdioden 12 kurz hell aufblitzen. Bei der ersten Betätigung wird jeweils die in Figuren 1 bis 3 untere Hälfte der Leuchtdioden 12, 13 der Warmwasserleuchtdiodenzeile 10 und der Kaltwasserleuchtdiodenzeile 11 mit der Steuereinheit so angesteuert, dass sie in einem Aktiv-Modus hell strahlen, um dem Benutzer zu signalisieren, dass der Wasserfluss gemäß den Grundwerten vorliegt.

Wird der Wasservolumenstrom durch Betätigen des Mengenänderungssensors 4 verändert, so wird auch die Anzahl der angesteuerten Leuchtdioden 12, 13 beider Leuchtdiodenzeilen 10, 11 entsprechend verändert. Die Anzahl der insgesamt strahlenden Leuchtdioden 12, 13 ist ein somit Maß für den Wasservolumenstrom. Das Verhältnis der Anzahl der strahlenden Warmwasser-Leuchtdioden 12 zur Anzahl der strahlenden Kaltwasser-Leuchtdioden 13 bleibt hierbei unverändert.

Bei dem größten einstellbaren Wasservolumenstrom mit der mittleren Wassertemperatur strahlen alle Leuchtdioden 12, 13 (Figur 2).

Wird der Temperaturerhöhungssensor 3 ein weiteres Mal betätigt, so wird die Wassertemperatur durch entsprechendes Ändern der Ventileinstellungen vergrößert, wobei der Gesamtvolumenstrom des Mischwassers konstant bleibt. Darüber hinaus werden die Leuchtdioden 12 der Warmwasserleuchtdiodenzeile 10 zunächst so angesteuert, dass diese kurz aufblitzen. Anschließend wird mit der Steuereinheit die Anzahl der angesteuerten Leuchtdioden 13 der Kaltwasserleuchtdiodenzeile 11 in Figuren 1 bis 3 von oben nach unten verringert, um dem Benutzer zu signalisieren, dass die Menge des zuströmenden Kaltwassers verringert wurde. Gleichzeitig wird die Anzahl der angesteuerten Leuchtdioden 12 der Warmwasserleuchtdiodenzeile 10 entsprechend erhöht, um anzuzeigen, dass die Menge des zuströmenden Warmwassers vergrößert wurde.

Sobald der höchste einstellbare Wert für die Wassertemperatur erreicht ist, also die Warmwasserspeiseleitung vollständig geöffnet und die Kaltwasserspeiseleitung geschlossen ist, werden die Leuchtdioden 12 der Warmwasserleuchtdiodenzeile 10 mit der Steuereinheit dreimal kurz angesteuert, so dass diese dreimal aufblitzen, um dem Benutzer zu signalisieren, dass keine weitere Temperaturerhöhung möglich ist. Auch beim Erreichen des höchsten einstellbaren Wertes für die Wassertemperatur wird weiterhin die in Figur 3 unterste Leuchtdiode 13 der Kaltwasserleuchtdiodenzeile 11 angesteuert, um den Benutzer auf die Funktion des Temperaturverringerungssensors 33 hinzuweisen.

Entsprechend wird zur Verringerung der Wassertemperatur vorgegangen. Hierzu wird der Temperaturverringerungssensor 33 betätigt. Infolgedessen werden die Leuchtdioden 13 der Kaltwasserleuchtdiodenzeile 11 mit der Steuereinheit kurz angesteuert, so dass sie kurz aufblitzen. Daraufhin wird mit der Steuereinheit die Anzahl der angesteuerten Leuchtdioden 12 der Warmwasserleuchtdiodenzeile 10 entsprechend verringert und die Anzahl der angesteuerten Leuchtdioden 13 der Kaltwasserleuchtdiodenzeile 11 entsprechend erhöht, um dem Benutzer eine Verringerung der Wassertemperatur zu signalisieren (Figur 1).

Wird der Wasserfluss statt mit dem Temperaturerhöhungssensor 3 durch Betätigen des Temperaturverringerungssensors 33 gestartet, so steuert die Steuereinheit die Leuchtdioden 13 der Kaltwasserleuchtdiodenzeile 11 entsprechend an, so dass diese kurz aufblitzen. Die weitere Betätigung erfolgt analog zu dem bereits erläuterten Ablauf nach dem Starten des Wasserflusses durch Betätigen des Temperaturerhöhungssensors 3.

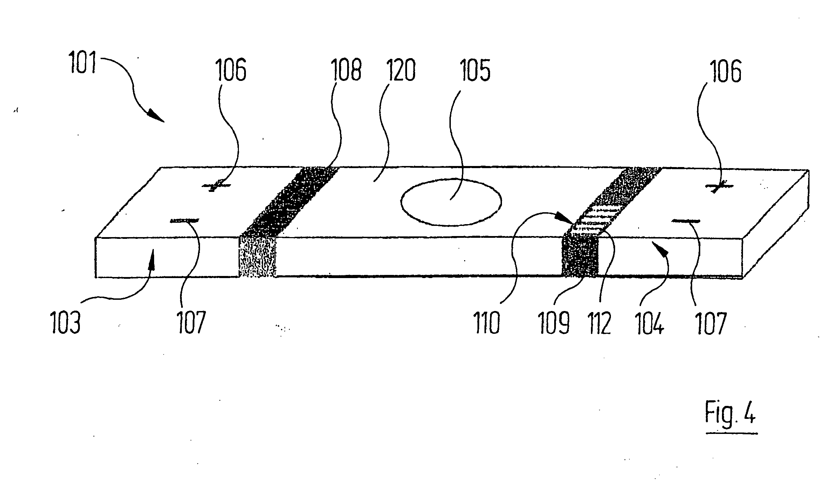

In Figur 4 ist ein zweites Ausführungsbeispiel der Erfindung dargestellt.

Im Unterschied zum ersten, in Verbindung mit Figur 1 bis 3 erläuterten Ausführungsbeispiel ist ein Mengenänderungssensor 104 statt in der Mitte einer Betätigungsvorrichtung 101 an deren in Figur 4 rechten Ende vorgesehen. Darüber hinaus ist anstelle jeweils eines separaten Temperaturerhöhungssensors 3 und eines Temperaturverringerungssensors 33 ein kombinierter Temperaturänderungssensor 103 zum Verändern der Wassertemperatur auf der linken Seite der Betätigungsvorrichtung 101 angeordnet. Dort, wo im ersten Ausführungsbeispiel der Mengenänderungssensor 4 angeordnet ist, ist im zweiten Ausführungsbeispiel ein Auslaufelement 120 ohne Sensorfunktion mit einer durchgängigen Öffnung 105 für einen nicht dargestellten Wasserauslauf vorgesehen.

Auf der in Figur 4 oberen Oberfläche des Mengenänderungssensor 104 und des Temperaturänderungssensors 103 ist jeweils an einer Seite ein Pluszeichen 106 angebracht, um dem Benutzer zu signalisieren, dass durch Betätigung des jeweiligen Sensors 103, 104 an dieser Stelle die Menge beziehungsweise die Temperatur des austretenden Wassers erhöht wird. An der anderen Seite sind die Sensoren 103, 104 jeweils entsprechend mit einem Minuszeichen 107 versehen.

Zwischen dem Temperaturänderungssensor 103 und dem Auslaufelement 120 ist ein Distanzelement 108 und zwischen dem Auslaufelement 120 und dem Mengenänderungssensor 104 ist ein Aufnahmeelement 109 für eine Bargraphzeile 110 angeordnet.

Mit der Bargraphzeile 110 wird sowohl die Funktion der Sensoren 103, 104 als auch die aktuelle Wassertemperatur und die aktuelle Wasserdurchflussmenge visualisiert.

Die Bargraphzeile 110 erstreckt sich über die gesamte Breite der Betätigungsvorrichtung 101. Sie weist eine Vielzahl von rechteckigen Bargraphelementen 112 auf, die hintereinander angeordnet sind.

Jedes Bargraphelement 112 verfügt jeweils über eine in Figur 4 nicht sichtbare rot strahlende und eine blau strahlende Leuchtdiode, die paarweise nebeneinander angeordnet sind, so dass sie jeweils einen balkenförmigen Bereich mitbilden. Die Bargraphzeile 110 weist so gewissermaßen zwei direkt nebeneinander angeordnete Leuchtdiodenzeilen auf, die in ihrer Funktion der Warmwasserleuchtdiodenzeile 10 beziehungsweise Kaltwasserleuchtdiodenzeile 11 aus dem ersten Ausführungsbeispiel entsprechen. Die Leuchtdioden sind jeweils einzeln mit der Steuereinheit steuerbar verbunden. Durch die angesteuerten rot beziehungsweise blau strahlenden Leuchtdioden wird entsprechend eine rote beziehungsweise blaue Fläche gekennzeichnet.

Um den Wasserfluss zu starten, wird einer der beiden Sensoren 103, 104 mit einer Hand berührt. Der Wasserfluss wird daraufhin analog zum ersten Ausführungsbeispiel gestartet.

Um den Wasservolumenstrom oder die Wassertemperatur zu vergrößern, wird der Mengenänderungssensor 104 beziehungsweise der Temperaturänderungssensor 103 im Bereich seines Pluszeichens 106 entweder mehrmals langsam hintereinander oder solange berührt, bis der gewünschte Wasservolumenstrom beziehungsweise die gewünschte Wassertemperatur eingestellt ist. Ansonsten erfolgt die Änderung des Wasservolumenstroms beziehungsweise der Wassertemperatur analog zu dem ersten Ausführungsbeispiel.

Zur Verringerung des Wasservolumenstroms beziehungsweise der Wassertemperatur wird er im Bereich seines Minuszeichens 107 entsprechend betätigt. Wird der entsprechende Sensor 103, 104 mehrmals schnell hintereinander berührt, so stoppt dies den Wasserdurchfluss.

Die Visualisierung dieser Vorgänge geschieht analog zur Visualisierung der entsprechenden Vorgänge gemäß dem ersten, in Verbindung mit Figuren 1 bis 3 erläuterten Ausführungsbeispiel.

Es kann auch vorgesehen sein, dass der Wasserfluss lediglich durch Betätigen des Mengenänderungssensor 4; 104 gestartet werden kann.

Der Wasserfluss kann bei allen Ausführungsbeispielen auch mit einem separaten Schalter oder Sensor, vorzugsweise einem ein Piezoelement aufweisenden Schalter gestartet und/oder gestoppt werden.

Beispielsweise kann ein separater Sensor zum Einschalten des Wasservolumenstroms vorgesehen sein. Bei Betätigen dieses Sensors wird der Wasserfluss gestartet und mit einer Sicherheitsabschaltung nach beispielsweise 80 Sekunden gestoppt, sofern er nicht vorher durch Betätigung eines weiteren separaten Sensors zum Ausschalten gestoppt wurde. Wird einer der anderen Sensoren betätigt, arbeitet die Sanitärarmatur als Selbstschlussarmatur und schaltet automatisch nach beispielsweise 10 Sekunden ab.

Statt des Mengenänderungssensor 4; 104 kann auch der Wasserauslauf selbst als kapazitiver Sensor verwendet werden, so dass auf einen gesonderten Mengenänderungssensor 4; 104 verzichtet werden kann.

Die Sensoren 3, 4, 33; 103, 104 können beispielsweise Piezoelemente aufweisende oder kapazitive Sensoren sein. Es können auch andere Sensoren, insbesondere optische Sensoren, oder Taster, die mit oder ohne direkte Berührung arbeiten, beispielsweise Schalter mit Piezoelementen eingesetzt werden.

Statt der Sensoren 3, 4, 33; 103, 104 kann auch ein mechanisches Betätigungselement, beispielsweise ein Mischhebel oder dergleichen vorgesehen sein. Das Verhältnis der Anzahl angesteuerter rot strahlender Leuchtdioden zur Anzahl angesteuerter blau strahlender Leuchtdioden entspricht dann dem Verhältnis der Öffnungsquerschnitte der Proportional- oder Temperierventile oder dergleichen.

Statt der elektronischen Sicherheitsfunktion, mit der ein Dauerlauf verhindert wird, indem nach etwa 80 Sekunden der Wasserfluss abgeschaltet wird, kann auch eine Selbstschlussarmatur als Temperierarmatur verwendet werden, die bereits nach etwa 10 Sekunden den Wasserfluss abschaltet.

Es ist auch möglich, dass bei den vorgegebenen Grundwerten jeweils alle rot strahlenden und blau strahlenden Leuchtdioden der Leuchtdiodenzeilen 10, 11 beziehungsweise der Bargraphzeile 110 mit der Steuereinheit angesteuert werden und strahlen. Bei einer Temperaturerhöhung / Temperaturverringerung wird dann die Anzahl der blau strahlenden Leuchtdioden / rot strahlenden Leuchtdioden, die angesteuert werden, verkleinert.

Bei beiden Ausführungsbeispielen kann alternativ oder zusätzlich auch vorgesehen sein, dass bei einer Betätigung eines der Sensoren 3, 33; 103, 104 zunächst eine die vom Benutzer eingestellte Soll-Wassertemperatur beziehungsweise den Soll-Wasservolumenstrom repräsentierende Anzahl von Leuchtdioden 11, 12 kurz strahlend angesteuert wird, um dem Benutzer eine sofortige Rückmeldung über die Soll-Einstellung zu geben. Anschließend kann die aktuell vorliegende Ist-Wassertemperatur beziehungsweise der aktuell vorliegende Ist-Wasservolumenstrom dargestellt werden, indem beispielsweise die entsprechenden Leuchtdioden 11, 12 solange blinken, bis die Wassertemperatur beziehungsweise der Wasservolumenstrom ihre jeweilige Soll-Einstellung erreicht hat.

Inaktive, nicht angesteuerte Leuchtdioden brauchen nicht vollständig abgeschaltet zu werden. Es genügt, lediglich ihre Helligkeit vorzugsweise auf eine Standby-Energiestufe zu reduzieren, so dass ein homogenes Bild der Betätigungsvorrichtung 1; 101 erzielt wird und außerdem über die im Standby-Modus strahlenden Leuchtdioden der noch verfügbare Einstellbereich erkennbar ist.

Es können anstatt nur der rot strahlenden oder blau strahlenden Leuchtdioden auch alle Leuchtdioden dreimal oder öfter mit der Steuereinheit angesteuert werden, wenn der niedrigste oder höchste einstellbare Wassertemperaturwert erreicht ist.

Es kann auch eine einzige Leuchtdiodenzeile beziehungsweise eine Bargraphzeile mit abwechselnd einer rot strahlenden Leuchtdiode / einem rot strahlenden Bargraphelement und einer blau strahlenden Leuchtdiode / einem blau strahlenden Bargraphelement verwendet werden.

Auch andere Farbkombinationen als rot und blau können verwendet werden.

Die Anzahl der strahlenden Leuchtdioden kann bei einer Verringerung des Wasservolumenstroms statt von einer Seite her auch symmetrisch von außen nach innen reduziert werden. Die letzte Leuchtdiode, die beim Erreichen des niedrigsten Wertes des Wasservolumenstroms noch leuchtet, ist in diesem Falle in der Mitte der Leuchtdiodenzeile 10, 11 beziehungsweise der Bargraphzeile 110 angeordnet.

Es können auch andere Leuchtmittel als Leuchtdioden Verwendung finden.

Statt der Leuchtdiodenzeile 10, 11 beziehungsweise der Bargraphzeile 110 kann auch eine andere Anzeigeeinrichtung beispielsweise ein im Wesentlichen lineares insbesondere farbiges Display, beispielsweise ein LCD- oder TFT-Display oder dergleichen, vorgesehen sein. In diesem Fall ist die Ausdehnung einer auf dem Display dargestellten Fläche ein Maß für die Wassertemperatur und/oder den Wasservolumenstrom.

Die optische Anzeige durch die Leuchtdiodenzeilen 10, 11 beziehungsweise die Bargraphzeile 110 ist bei einer nicht dargestellten Ausführungsform durch eine akustische Ausgabeeinheit ergänzt, die bei einer Betätigung eines Sensors 3, 4, 33; 103, 104 ein akustisches Signal erzeugt.

## Patentansprüche

1. Betätigungsvorrichtung für eine sanitäre Armatur mit
a) wenigstens einem Betätigungselement zum Ändern der Wassertemperatur und/oder des Wasservolumenstroms;
b) wenigstens einer Anzeigeeinrichtung zum Visualisieren der Wassertemperatur, wobei die Anzeigeeinrichtung mindestens eine Linie oder Fläche umfasst, in welcher eine Vielzahl einzeln ansteuerbarer Leuchtmittel angeordnet ist;
wobei
c) zwei Arten von Leuchtmitteln vorgesehen sind, mit denen der Wasservolumenstrom durch eine Warmwasser-Speiseleitung der Armatur und der Wasservolumenstrom durch eine Kaltwasser-Speiseleitung der Armatur getrennt visualisiert werden können;
**dadurch gekennzeichnet, dass**
d) die Summe der aktivierten Leuchtmittel, welche den Wasservolumenstrom durch die Warmwasser-Speiseleitung visualisieren, und der aktivierten Leuchtmittel, welche den Wasservolumenstrom durch die Kaltwasser-Speiseleitung visualisieren, ein Maß für den Wasservolumenstrom des abgegebenen Wassers ist.

2. Betätigungsvorrichtung nach Anspruch 1, **dadurch gekennzeichnet, dass** die Anzeigeeinrichtung (10; 110) die Funktion des Betätigungselements (3, 4, 33; 103, 104) visualisiert.

3. Betätigungsvorrichtung nach Anspruch 1 oder 2, gekennzeichnet, dass die Anzeigeeinrichtung (10; 110) im Wesentlichen linear ist.

4. Betätigungsvorrichtung nach einem der vorigen Ansprüche, **dadurch gekennzeichnet, dass** die Leuchtmittel (12, 13; 112) Leuchtdioden umfassen.

5. Betätigungsvorrichtung nach einem der vorigen Ansprüche, **dadurch gekennzeichnet, dass** die Anzeigeeinrichtung (10; 110) in unterschiedlichen Farben strahlende Leuchtmittel (12, 13; 112) aufweist, die insbesondere paarweise nebeneinander angeordnet sind.

6. Betätigungsvorrichtung nach einem der vorigen Ansprüche, **dadurch gekennzeichnet, dass** eine Anzahl von strahlenden Leuchtmitteln (12, 13; 112) der Anzeigeeinrichtung (10; 110) proportional zum Wasservolumenstrom ist.

7. Betätigungsvorrichtung nach einem der vorigen Ansprüche, **dadurch gekennzeichnet, dass** das Verhältnis einer Ausdehnung einer mit der Anzeigeeinrichtung (10; 110) in einer ersten Farbe, insbesondere in Rot, dargestellten ersten Fläche zu einer Ausdehnung einer in einer zweiten Farbe, insbesondere in Blau, dargestellten zweiten Fläche, insbesondere das Verhältnis der Anzahl von in der ersten Farbe strahlenden Leuchtmitteln (12), die die erste Fläche kennzeichnen, zur Anzahl von in der zweiten Farbe strahlenden Leuchtmittel (13), die die zweite Fläche kennzeichnen, abhängig von der Wassertemperatur ist.

8. Betätigungsvorrichtung nach einem der vorigen Ansprüche, **dadurch gekennzeichnet, dass** die Anzeigeeinrichtung (110) eine Vielzahl von Bargraphelementen (112) aufweist.

9. Betätigungsvorrichtung nach einem der vorigen Ansprüche, **gekennzeichnet durch** eine akustische Ausgabeeinheit.

10. Betätigungsvorrichtung nach einem der vorigen Ansprüche, **dadurch gekennzeichnet, dass** das Betätigungselement (3, 4, 33; 103, 104) ein Sensor, insbesondere ein wenigstens ein Piezoelement aufweisender Sensor oder ein kapazitiver Sensor, ist.

11. Betätigungsvorrichtung nach einem der vorigen Ansprüche, **dadurch gekennzeichnet, dass** der Wasserauslauf selbst ein kapazitives Betätigungselement ist.

12. Betätigungsvorrichtung nach einem der vorigen Ansprüche, **dadurch gekennzeichnet, dass** ein mechanisches Betätigungselement, insbesondere ein Mischhebel, vorgesehen ist.

13. Betätigungsvorrichtung nach einem der vorigen Ansprüche, **dadurch gekennzeichnet, dass** wenigstens ein separates Betätigungselement zum Starten und/oder Stoppen des Wasservolumenstroms vorgesehen ist.

14. Betätigungsvorrichtung nach einem der vorigen Ansprüche, **dadurch gekennzeichnet, dass** sie Teil einer elektronischen Sanitärarmatur ist.

15. Verfahren zum Betreiben einer Betätigungsvorrichtung für eine sanitäre Armatur, bei dem
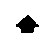 wenigstens ein Betätigungselement zum Ändern der Wassertemperatur und/oder des Wasservolumenstroms betätigt wird,
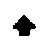 wenigstens ein optisches Signal in wenigstens einer zu der Betätigungsvorrichtung gehörigen Anzeigeeinrichtung ausgegeben wird, welche mindestens eine Linie oder Fläche umfasst, in welcher eine Vielzahl von Leuchtmitteln angeordnet ist, die einzeln angesteuert werden können;
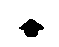 zwei voneinander unterscheidbare Arten von optischen Signalen ausgegeben werden, mit denen der Wasservolumenstrom durch eine Warmwasser-Speiseleitung der Armatur und der Wasservolumenstrom durch eine Kaltwasser-Speiseleitung der Armatur getrennt visualisiert werden können;
**dadurch gekennzeichnet, dass**
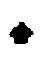 die Summe der aktivierten Leuchtmittel für den Wasservolumenstrom durch die Warmwasser-Speiseleitung und die Kaltwasser-Speiseleitung als ein Maß für den Wasservolumenstrom des abgegebenen Wassers verwendet wird.

16. Verfahren nach Anspruch 15, **dadurch gekennzeichnet, dass** eine zum Wasservolumenstrom proportionale Anzahl von Leuchtmitteln (12, 13; 112)aktiviert wird.

17. Verfahren nach Anspruch 15 oder 16 , **dadurch gekennzeichnet, dass** abhängig von der Wassertemperatur das Verhältnis einer Ausdehnung einer mit der Anzeigeeinrichtung (10; 110) in einer ersten Farbe, insbesondere in Rot, dargestellten ersten Fläche zu einer Ausdehnung einer in einer zweiten Farbe, insbesondere in Blau, dargestellten zweiten Fläche, insbesondere das Verhältnis der Anzahl von in der ersten Farbe strahlenden Leuchtmitteln (12), die die erste Fläche kennzeichnen, zur Anzahl von in der zweiten Farbe strahlenden Leuchtmitteln (13), die die zweite Fläche kennzeichnen, vorgegeben wird.

18. Verfahren nach einem der Ansprüche 15 bis 17, **dadurch gekennzeichnet, dass** ein optisches und/oder akustisches Signal erzeugt wird, sobald ein höchster einstellbarer Wert oder ein niedrigster einstellbarer Wert der Wassertemperatur und/oder des Wasservolumenstroms erreicht ist.

19. Verfahren nach einem der Ansprüche 15 bis 18, **dadurch gekennzeichnet, dass** ein optisches und/oder akustisches Signal erzeugt wird, sobald das Betätigungselement (3, 4, 33; 103, 104) betätigt wird.

20. Verfahren nach einem der Ansprüche 15 bis 19, **dadurch gekennzeichnet, dass** bei einer Betätigung eines Betätigungselements (3, 4, 33; 103, 104) zunächst das Signal abhängig von einer eingestellten Soll-Wassertemperatur und/oder einem eingestellten Soll-Wasservolumenstrom, und anschließend abhängig von der aktuell vorliegenden Ist-Wassertemperatur und/oder dem aktuellen vorliegenden Ist-Wasservolumenstrom insbesondere bis zum Erreichen der Soll-Einstellung alternierend ausgegeben wird.

21. Verfahren nach einem der Ansprüche 15 bis 20, **dadurch gekennzeichnet, dass** es bei einer elektronischen Sanitärarmatur angewandt wird.

## Claims

1. An actuating device for a sanitary fitting having
a) at least one actuating element for changing the water temperature and/or the volumetric water flow rate;
b) at least one display device for visualising the water temperature, wherein the display device comprises at least one line or face in which a plurality of individually controllable light sources is arranged;
wherein
c) two types of light source are provided, by means of which the volumetric water flow rate through a hot water supply line of the fitting and the volumetric water flow rate through a cold water supply line of the fitting can be visualised separately;
**characterised in that**
d) the sum of the activated light sources which visualise the volumetric water flow rate through the hot water supply line and the activated light sources which visualise the volumetric water flow rate through the cold water supply line is a measure of the volumetric water flow rate of the discharged water.

2. An actuating device according to Claim 1, **characterised in that** the display device (10; 110) visualises the function of the actuating element (3, 4, 33; 103, 104).

3. An actuating device according to Claim 1 or 2, **characterised in that** the display device (10; 110) is substantially linear.

4. An actuating device according to one of the preceding claims, **characterised in that** the light sources (12, 13; 112) comprise light diodes.

5. An actuating device according to one of the preceding claims, **characterised in that** the display device (10; 110) has light sources (12, 13; 112) shining in different colours, which are arranged in particular in pairs next to one another.

6. An actuating device according to one of the preceding claims, **characterised in that** the number of shining light sources (12, 13; 112) of the display device (10; 110) is proportional to the volumetric water flow rate.

7. An actuating device according to one of the preceding claims, **characterised in that** the ratio of an extent of a first face depicted by the display device (10; 110) in a first colour, in particular in red, to an extent of a second face depicted in a second colour, in particular in blue, in particular the ratio of the number of light sources (12) shining in the first colour, which represent the first face, to the number of light sources (13) shining in the second colour, which represent the second face, is dependent on the water temperature.

8. An actuating device according to one of the preceding claims, **characterised in that** the displace device (110) has a plurality of bar graph elements (112).

9. An actuating device according to one of the preceding claims, **characterised by** an acoustic output unit.

10. An actuating device according to one of the preceding claims, **characterised in that** the actuating element (3, 4, 33; 103; 104) is a sensor, in particular a sensor having at least one piezo element or a capacitive sensor.

11. An actuating device according to one of the preceding claims, **characterised in that** the water outlet is itself a capacitive actuating element.

12. An actuating device according to one of the preceding claims, **characterised in that** a mechanical actuating element, in particular a mixing lever, is provided.

13. An actuating device according to one of the preceding claims, **characterised in that** at least one separate actuating element for starting and/or stopping the volumetric water flow is provided.

14. An actuating device according to one of the preceding claims, **characterised in that** it is part of an electronic sanitary fitting.

15. A process for operating an actuating device for a sanitary fitting, in which
• at least one actuating element for changing the water temperature and/or the volumetric water flow rate is actuated,
• at least one optical signal is output in at least one display device which belongs to the actuating device and comprises at least one line or face in which a plurality of individually controllable light sources is arranged;
• two mutually distinguishable types of optical signal are output, by means of which the volumetric water flow rate through a hot water supply line of the fitting and the volumetric water flow rate through a cold water supply line of the fitting can be visualised separately;
**characterised in that**
• the sum of the activated light sources for the volumetric water flow rate through the hot water supply line and the cold water supply line is used as a measure of the volumetric water flow rate of the discharged water.

16. A process according to Claim 15, **characterised in that** a number of light sources (12, 13; 112) is activated which is proportional to the volumetric water flow rate.

17. A process according to Claim 15 or 16, **characterised in that**, depending on the water temperature, the ratio of an extent of a first face depicted by the display device (10; 110) in a first colour, in particular in red, to an extent of a second face depicted in a second colour, in particular in blue, in particular the ratio of the number of light sources (12) shining in the first colour, which represent the first face, to the number of light sources (13) shining in the second colour, which represent the second face, is predetermined.

18. A process according to one of Claims 15 to 17, **characterised in that** an optical and/or acoustic signal is generated as soon as a highest settable value or a lowest settable value of the water temperature and/or the volumetric water flow rate is reached.

19. A process according to one of Claims 15 to 18, **characterised in that** an optical and/or acoustic signal is generated as soon as the actuating element (3, 4, 33; 103, 104) is actuated.

20. A process according to one of Claims 15 to 19, **characterised in that**, if an actuating element (3, 4, 33; 103, 104) is actuated, the signal is output alternately, firstly depending on a specified water temperature and/or a specified volumetric water flow rate and then depending on the current actual water temperature and/or the current actual volumetric water flow rate, in particular until the specified setting is reached.

21. A process according to one of Claims 15 to 20, **characterised in that** it is applied in an electronic sanitary fitting.

## Revendications

1. Dispositif d'actionnement pour une robinetterie sanitaire comportant
a) au moins un élément d'actionnement pour modifier la température d'eau et/ou le débit d'eau ;
b) au moins un moyen d'affichage pour visualiser la température d'eau, lequel moyen d'affichage comprend au moins une ligne ou une surface dans laquelle est disposée une pluralité de sources lumineuses activables individuellement ;
dans lequel
c) deux types de sources lumineuses sont prévus, au moyen desquels le débit d'eau à travers une conduite d'alimentation en eau chaude de la robinetterie et le débit d'eau à travers une conduite d'alimentation en eau froide de la robinetterie peuvent être visualisés séparément ;
**caractérisé en ce que**
d) la somme des sources lumineuses activées qui visualisent le débit d'eau à travers la conduite d'alimentation en eau chaude et des sources lumineuses qui visualisent le débit d'eau à travers la conduite d'alimentation en eau froide est une mesure du débit d'eau de l'eau délivrée.

2. Dispositif d'actionnement selon la revendication 1, **caractérisé en ce que** le moyen d'affichage (10 ; 110) visualise le fonctionnement de l'élément d'actionnement (3, 4, 33 ; 103, 104).

3. Dispositif d'actionnement selon la revendication 1 ou 2, **caractérisé en ce que** le moyen d'affichage (10 ; 110) est sensiblement linéaire.

4. Dispositif d'actionnement selon une des revendications précédentes, **caractérisé en ce que** les sources lumineuses (12, 13 ; 112) comprennent des diodes électroluminescentes.

5. Dispositif d'actionnement selon une des revendications précédentes, **caractérisé en ce que** le moyen d'affichage (10 ; 110) présente des sources lumineuses (12, 13 ; 112) rayonnant en différentes couleurs, qui sont en particulier disposées les unes à côté des autres par paires.

6. Dispositif d'actionnement selon une des revendications précédentes, **caractérisé en ce qu'**un nombre de sources lumineuses (12, 13 ; 112) rayonnantes du moyen d'affichage (10 ; 110) est proportionnel au débit d'eau.

7. Dispositif d'actionnement selon une des revendications précédentes, **caractérisé en ce que** le rapport entre une extension d'une première surface représentée avec le moyen d'affichage (10 ; 110) dans une première couleur, en particulier en rouge, et une extension d'une deuxième surface représentée dans une deuxième couleur, en particulier en bleu, en particulier le rapport entre le nombre de sources lumineuses (12) rayonnant dans la première couleur, qui caractérisent la première surface, et le nombre de sources lumineuses (13) rayonnant dans la deuxième couleur, qui caractérisent la deuxième surface, dépend de la température d'eau.

8. Dispositif d'actionnement selon une des revendications précédentes, **caractérisé en ce que** le moyen d'affichage (110) présente une pluralité d'éléments graphiques en barres (112).

9. Dispositif d'actionnement selon une des revendications précédentes, **caractérisé par** une unité de sortie acoustique.

10. Dispositif d'actionnement selon une des revendications précédentes, **caractérisé en ce que** l'élément d'actionnement (3, 4, 33 ; 103, 104) est un capteur, en particulier un capteur présentant au moins un élément piézoélectrique ou un capteur capacitif.

11. Dispositif d'actionnement selon une des revendications précédentes, **caractérisé en ce que** la sortie d'eau est elle-même un élément d'actionnement capacitif.

12. Dispositif d'actionnement selon une des revendications précédentes, **caractérisé en ce qu'**un élément d'actionnement mécanique, en particulier un levier mélangeur, est prévu.

13. Dispositif d'actionnement selon une des revendications précédentes, **caractérisé en ce qu'**au moins un élément d'actionnement séparé est prévu pour démarrer et/ou stopper le débit d'eau.

14. Dispositif d'actionnement selon une des revendications précédentes, **caractérisé en ce qu'**il fait partie d'une robinetterie sanitaire électronique.

15. Procédé de fonctionnement d'un dispositif d'actionnement pour une robinetterie sanitaire, dans lequel
• au moins un élément d'actionnement pour modifier la température d'eau et/ou le débit d'eau est actionné,
• au moins un signal optique est émis dans au moins un moyen d'affichage appartenant au dispositif d'actionnement, lequel signal optique comprend au moins une ligne ou une surface dans laquelle est disposée une pluralité de sources lumineuses qui peuvent être activées individuellement ;
• deux types de signaux optiques pouvant être distingués l'un de l'autre sont émis, au moyen desquels le débit d'eau à travers une conduite d'alimentation en eau chaude de la robinetterie et le débit d'eau à travers une conduite d'alimentation en eau froide de la robinetterie peuvent être visualisés séparément ;
**caractérisé en ce que**
• la somme des sources lumineuses activées pour le débit d'eau à travers la conduite d'alimentation en eau chaude et la conduite d'alimentation en eau froide est utilisée comme une mesure du débit d'eau de l'eau délivrée.

16. Procédé selon la revendication 15, **caractérisé en ce qu'**un nombre de sources lumineuses (12, 13 ; 112) proportionnel au débit d'eau est activé.

17. Procédé selon la revendication 15 ou 16, **caractérisé en ce que** le rapport entre une extension d'une première surface représentée avec le moyen d'affichage (10 ; 110) dans une première couleur, en particulier en rouge, et une extension d'une deuxième surface représentée dans une deuxième couleur, en particulier en bleu, en particulier le rapport entre le nombre de sources lumineuses (12) rayonnant dans la première couleur, qui caractérisent la première surface, et le nombre de sources lumineuses (13) rayonnant dans la deuxième couleur, qui caractérisent la deuxième surface, est prédéfini en fonction de la température d'eau.

18. Procédé selon une des revendications 15 à 17, **caractérisé en ce qu'**un signal optique et/ou acoustique est généré dès qu'une valeur maximale réglable ou une valeur minimale réglage de la température d'eau et/ou du débit d'eau est atteinte.

19. Procédé selon une des revendications 15 à 18, **caractérisé en ce qu'**un signal optique et/ou acoustique est généré dès que l'élément d'actionnement (3, 4, 33 ; 103, 104) est actionné.

20. Procédé selon une des revendications 15 à 19, **caractérisé en ce qu'**en cas d'actionnement d'un élément d'actionnement (3, 4, 33 ; 103, 104), le signal est émis alternativement d'abord en fonction d'une température d'eau de consigne réglée et/ou d'un débit d'eau de consigne réglé et ensuite en fonction de la température d'eau réelle actuellement existante et/ou du débit d'eau réel actuellement existant, en particulier jusqu'à l'atteinte du réglage de consigne.

21. Procédé selon une des revendications 15 à 20, **caractérisé en ce qu'**il est appliqué dans une robinetterie sanitaire électronique.
